Europäisches Patentamt

European Patent Office

Office européen des brevets

(11) Publication number : **0 668 337 A2**

# EUROPEAN PATENT APPLICATION

(21) Application number : **95300706.9**

(22) Date of filing : **03.02.95**

(51) Int. Cl.⁶ : **C09J 157/00,** // (C09J157/00, 131:00)

(30) Priority : **22.02.94 US 199074**

(43) Date of publication of application :
**23.08.95 Bulletin 95/34**

(84) Designated Contracting States :
**DE FR GB IT**

(72) Inventor : **Eisenhart, Eric Karl**
**60 John Dyer Way**
**Doylestown, Pennsylvania 18901 (US)**
Inventor : **Jacobs, Bradley Anson**
**105 Stockton Court**
**Chalfont, Pennsylvania 18914 (US)**
Inventor : **Graziano, Louis Christopher**
**162 Willow Lane**
**Warrington, Pennsylvania 18976 (US)**

(71) Applicant : **ROHM AND HAAS COMPANY**
**100 Independence Mall West**
**Philadelphia, Pennsylvania 19106-2399 (US)**

(74) Representative : **Tanner, James Percival et al**
**ROHM AND HAAS (UK) LTD.**
**European Operations Patent Department**
**Lennig House**
**2 Mason's Avenue**
**Croydon CR9 3NB (GB)**

(54) **Laminating adhesive composition.**

㊸   A polymer emulsion includes from 30 weight percent to 70 weight percent solids dispersed in an aqueous medium. The solids of the emulsion include from 10 weight percent to 90 weight percent of a first polymer, said first polymer having first repeating units derived from a vinyl ester monomer and having a glass transition temperature of - 40°C to 0°C and from 10 weight percent to 90 weight percent a second polymer that includes first repeating units derived from a vinyl ester monomer and that has a glass transition temperature of 5°C to 40°C. An aqueous adhesive composition includes from 30 weight percent to 70 weight percent solids in an aqueous medium and the solids portion of the adhesive composition includes from 15 weight percent to 80 weight percent of the first polymer, from 10 weight percent to 60 weight percent the second polymer and from 0.1 weight percent to 60 weight percent of a plasticizer compound. A method for making a laminated article includes applying a wet layer of the aqueous adhesive composition of the to a first substrate layer, covering the wet layer of adhesive composition with a second substrate layer and drying the layer of adhesive composition to form the laminated article. A laminated article includes two substrate layers bonded together by an interposed layer of the dried adhesive composition.

EP 0 668 337 A2

The present invention is directed to adhesive compositions and, more particularly, to aqueous adhesive compositions that are particularly well-adapted for wet lamination of cardboard packaging materials.

Adhesive compositions based on aqueous poly(vinyl ester/olefin) copolymer emulsions such as, for example, the poly(vinyl acetate/ethylene) copolymer emulsions disclosed in US-A-3,708,388, are well known and widely used for bonding packaging materials such as, for example, cardboard. Poly(vinyl ester/olefin) adhesive compositions typically include a plasticizer compound for improving the adhesion of the compositions to the substrates to be bonded. Plasticized poly(vinyl ester/olefin) adhesive compositions may be unsuitable for applications which require resistance to elevated temperature because the improved adhesion provided by the addition of plasticizer is obtained at the expense of reduced temperature resistance and reduced hot strength.

An aqueous polymer emulsion is disclosed. The emulsion includes from 30 weight percent to 70 weight percent solids dispersed in an aqueous medium. The solids of the emulsion include from 10 weight percent to 90 weight percent of a first polymer and from 10 weight percent to 90 weight percent a second polymer, wherein the first polymer includes repeating units derived from a vinyl ester monomer and has a glass transition temperature of -40°C to 0°C and the second polymer includes repeating units derived from a vinyl ester monomer and has a glass transition temperature ($T_g$) of 5°C to 40°C.

An aqueous adhesive composition is disclosed. The adhesive composition includes from 30 weight percent to 70 weight percent solids in an aqueous medium. The solids portion of the adhesive composition include from 15 weight percent to 80 weight percent of the above-disclosed first polymer, from 10 weight percent to 60 weight percent of the above-disclosed second polymer and from 0.1 weight percent to 60 weight percent of a plasticizer compound. The adhesive composition of the present invention provides high bond strength at room temperature and exhibits improved bond strength at elevated temperatures.

A laminated article is disclosed. The laminated article includes a first substrate layer, a second substrate layer and an adhesive layer interposed between the first and second substrate layers and bonding the first and second substrate layers together, wherein the adhesive layer comprises the solids portion of the above disclosed aqueous adhesive composition.

A method for making a laminated article wherein two substrate layers are bonded together by a dried layer of adhesive composition is disclosed. The method includes applying a wet layer of the above-described aqueous adhesive composition to a first substrate layer, covering the wet layer of adhesive composition with a second substrate layer and drying the layer of adhesive composition to form the laminated article.

The aqueous polymer emulsion of the present invention includes from 30 wt% to 70 wt%, more preferably 45 wt% to 60 wt%, polymer solids dispersed in an aqueous medium. As used herein the terminology "solids" refers collectively to all non-volatile components of an aqueous composition. The solids of the aqueous polymer emulsion of the present invention include from 10 wt% to 90 wt% of a first polymer that includes repeating units derived from a vinyl ester monomer and that has a glass transition temperature ($T_g$) within a range of from -40°C to 0°C and from 10 wt% to 90 wt% of a second polymer that includes repeating units derived from a vinyl ester monomer and that has a $T_g$ within a range of from 5°C to 40°C.

In a preferred embodiment, the first polymer has a $T_g$ of from about -35°C to about -5°C. In a more highly preferred embodiment, the first polymer has a $T_g$ of from about -35°C to about -10°C.

In a preferred embodiment, the second polymer has a $T_g$ of from about 10°C to about 35°C. In a more highly preferred embodiment, the first polymer has a $T_g$ of from about 15°C to about 35°C.

The $T_g$ ranges of the above-disclosed polymers are based on measured values obtained, for example, by differential scanning calorimetry of the respective polymers.

In a preferred embodiment, the vinyl ester monomer from which the respective repeating units of the first and second polymers are derived is independently selected from the group consisting of vinyl acetate, vinyl propionate, vinyl neononanoate, vinyl neodecanoate, vinyl-2-ethylhexanoate, vinyl pivalate, vinyl versatate or a mixture thereof.

The first and second polymers may, optionally, each independently include repeating units derived from an alkyl (meth)acrylate monomer, more preferably from a $(C_1-C_{20})$alkyl (meth)acrylate monomer. As used herein the terminology "alkyl (meth)acrylate monomer" refers collectively to alkyl acrylate monomers and alkyl methacrylate monomers and the terminology "$(C_1-C_{20})$alkyl" denotes an alkyl substituent group having from 1 to 20 carbon atoms per group. Suitable $(C_1-C_{20})$alkyl (meth)acrylate monomers include, for example, ethyl acrylate, butyl acrylate, 2-ethylhexyl acrylate, lauryl acrylate, cetyl acrylate, stearyl acrylate, eicosyl acrylate, methyl methacrylate, ethyl methacrylate, butyl methacrylate, isodecyl methacrylate, lauryl methacrylate, cetyl methacrylate, stearyl methacrylate, eicosyl methacrylate and mixtures thereof.

The first and second polymers may, optionally, each independently include up to about 10 wt%, more preferably up to about 5 wt %, repeating units derived from a monoethylenically unsaturated polar monomer, provided that no more than 3 wt%, and, more preferably, no more than 2 wt%, repeating units of each of the respective polymers are derived from a monoethylenically unsaturated carboxylic acid monomer. As used herein the terminology "monoethylenically unsaturated" means having a single site of ethylenic unsaturation per molecule. Suitable monoethylenically unsaturated polar monomers include, for example, hydroxy$(C_1\text{-}C_8)$alkyl (meth)acrylate monomers, wherein the terminology "hydroxy$(C_1\text{-}C_8)$alkyl" denotes a hydroxyalkyl substituent group having from 1 to 8 carbon atoms per group, and monoethylenically unsaturated carboxylic acid monomers. Suitable hydroxyalkyl (meth)acrylate monomers include, for example, hydroxyethyl acrylate, hydroxyethyl methacrylate, hydroxybutyl acrylate, hydroxypropyl methacrylate, 1-methyl-2-hydroxyethyl methacrylate and mixtures thereof. Suitable monoethylenically unsaturated carboxylic acid monomers include, for example, acrylic acid, methacrylic acid, itaconic acid, crotonoic acid, fumaric acid and mixtures thereof. Acrylic acid, methacrylic acid and mixtures thereof are preferred as the monoethylenically unsaturated carboxylic acid monomer.

The first and second polymers may, optionally, each independently be pre-crosslinked, that is, crosslinked during synthesis of the respective polymer, by including a small amount, for example, about 0.01 wt% to about 5 wt%, of a polyethylenically unsaturated monomer in the monomer mixture, wherein the terminology "polyethylenically unsaturated" means having two or more sites of ethylenic unsaturation per molecule. Suitable polyethylenically unsaturated monomers include, for example, allyl (meth)acrylate, diallyl phthalate, 1,4-butylene glycol di(meth)acrylate, trimethylolpropane tri(meth)acrylate, divinyl ketone, N,N'-methylenediacrylimide, the polyallyl and polyvinyl ethers of pentaerythritol and mixtures thereof.

The second polymer may, optionally, include up to about 20 wt%, more preferably up to about 15 wt%, repeating units derived from a monoolefinically unsaturated monomer such as, for example, ethylene, propylene or a mixture thereof.

In a preferred embodiment, the first polymer includes first repeating units, each derived from a vinyl ester monomer and further includes second repeating units derived from a $(C_1\text{-}C_{20})$ alkyl (meth)acrylate monomer.

In a highly preferred embodiment, the first repeating units of the first polymer are each derived from vinyl acetate.

In a highly preferred embodiment, the second repeating units of the first polymer are each derived from a $(C_1\text{-}C_{20})$ alkyl (meth)acrylate monomer selected from the group consisting of methyl acrylate, ethyl acrylate, butyl acrylate, ethylhexyl acrylate and mixtures thereof.

In a highly preferred embodiment, the first polymer further includes, in addition to the above-disclosed first and second repeating units, from about 0.1 wt% to about 10 wt% third repeating units derived from a monoethylenically unsaturated polar monomer.

In a more highly preferred embodiment, the first polymer includes, in addition to the above-disclosed first and second repeating units, from about 0.5 wt% about to 2 wt% third repeating units derived from a monoethylenically unsaturated carboxylic acid monomer.

In a very highly preferred embodiment, the first polymer includes from about 1 wt% to about 65 wt% first repeating units, each derived from vinyl acetate, from about 35 wt% to about 99 wt% second repeating units, each derived from an alkyl acrylate monomer selected from the group consisting of methyl acrylate, ethyl acrylate, butyl acrylate, ethylhexyl acrylate and mixtures thereof, from about up to about 2 wt%, more preferably from about 0.5 wt% to about 2 wt%, third repeating units each derived from acrylic acid, methacrylic acid or a mixture thereof.

In a first preferred embodiment, each of the repeating units of the second polymer is derived from a vinyl ester monomer independently selected from the group consisting of vinyl acetate, vinyl propionate, vinyl neononanoate, vinyl neodecanoate, vinyl-2-ethylhexanoate, vinyl pivalate, vinyl versatate or a mixture thereof.

In a highly preferred embodiment, the second polymer is a vinyl ester homopolymer, that is, each the repeating units of the second polymer is derived from the same vinyl ester monomer.

In a more highly preferred embodiment, the second polymer is a vinyl acetate homopolymer.

In an alternative preferred embodiment, the second polymer includes first repeating units, each derived from a vinyl ester monomer, and further includes second repeating units, each derived from an alkyl acrylate monomer selected from the group consisting of methyl acrylate, ethyl acrylate, butyl acrylate, ethylhexyl acrylate and mixtures thereof. More preferably, the alternative embodiment of the second polymer includes from about 24 to about 99 wt% first repeating units each derived from vinyl acetate and from about 1 wt% to about 76 wt% second repeating units each derived from an alkyl acrylate monomer selected from the group consisting of methyl acrylate, ethyl acrylate, butyl acrylate, ethylhexyl acrylate and mixtures thereof.

The first and second polymers are each made by polymerizing a monomer or a mixture of monomers to provide a polymer having repeating units derived from the monomer or the respective monomers of the mixture. The identity and relative amounts of the monomers of the mixture are selected within the above-disclosed limits, according to methods known in the art, so that the polymer produced by polymerizing the monomer mixture exhibits a $T_g$ within a desired range of $T_g$.

The $T_g$ of a proposed polymer composition may be estimated by methods known in the art such as, for example, by calculating the weighted average of the $T_g$ values for homopolymers derived from the respective monomers $M_1$, $M_2$, ... $M_n$, of the reaction mixture, according to equation (1):

$$T_g(\text{copolymer}) = \frac{n}{i=1} w_i T_{gi} \quad (1)$$

wherein:

$T_{g(\text{copolymer})}$ is the glass transition temperature calculated for the copolymer

$w_i$ is the weight fraction of monomer $M_1$ in the copolymer

$T_{gi}$ is the glass transition temperature of the homopolymer of $M_i$.

The glass transition temperature of homopolymers may be found, for example, in "Polymer Handbook", edited by J. Brandrup and E. H. Immergut, Interscience Publishers.

The $T_g$ of the proposed polymer composition may then be measured and, optionally, the polymer composition may subsequently be refined based on comparison of the respective estimated $T_g$ and the measured $T_g$ values.

Each of the above-disclosed embodiments of the first and second polymers of the adhesive composition of the present invention is made, for example, by polymerizing monomers according to known free radical-initiated emulsion polymerization techniques.

In a preferred embodiment, each of the polymers is made by an aqueous emulsion polymerization wherein a discontinuous monomer phase is dispersed in a continuous aqueous phase and polymerized in the presence of a colloidal stabilizer, for example, hydroxyethyl cellulose, carboxymethyl cellulose, dextrin, poly(vinyl alcohol), partially hydrolyzed poly(vinyl alcohol), fully hydrolyzed poly(vinyl alcohol), gum arabic or a mixture thereof.

The molecular weight of each of the respective first and second polymers may, optionally, be controlled in a conventional manner using a chain transfer agent.

Preferably, each of the above-disclosed aqueous polymer emulsions includes from about 30 wt% to about 70 wt%, more preferably about 45 wt% to about 60 wt%, polymer dispersed in an aqueous medium.

Preferably, the polymers of the above-disclosed aqueous polymer emulsions are each in the form of particles of about 100 nanometers to about 4000 nanometers in diameter.

Preferably, each of the above-disclosed polymer emulsions has a viscosity of about 100 centipoise (cP) to about 10,000 cP, more preferably about 200 cP to about 7500 cP. the viscosity of the emulsion may be conveniently measured using a Brookfield viscometer, for example, using a Brookfield Model No. RVT viscometer equipped with a #4 spindle and operated at 20 revolutions per minute.

In a preferred embodiment, the aqueous polymer emulsion of the present invention is made by combining a selected amount of aqueous emulsion of the first polymer with a selected amount of an aqueous emulsion of the second polymer, wherein the relative amounts of the respective emulsions are selected in view of the respective solids content of each of the emulsions, to provide an aqueous emulsion of the present invention that includes desired relative amounts of the first and second polymers.

In a preferred embodiment, the aqueous emulsion of the present invention includes from about 40 wt% to about 80 wt% of the first polymer and from about 20 wt% to about 60 wt% of the second polymer.

The adhesive composition of the present invention is made by combining 100 parts by weight (pbw) of the aqueous polymer emulsion of the present invention and from about 0.05 pbw to about 45 pbw, more preferably from about 5 pbw to about 25 pbw, of a plasticizer compound.

Suitable plasticizer compounds include, for example, phthalates such as dibutyl phthalate, benzoate derivatives such as diethylene glycol dibenzoate, dipropylene glycol dibenzoate, esters of dicarboxylic acids such as esters of $(C_2\text{-}C_6)$alcohols, for example, ethanol, with adipic acid or succinic acid.

In a preferred embodiment, the plasticizer is a mixture of diethylene glycol dibenzoate and dipropylene glycol dibenzoate.

In a preferred embodiment, the solids of the adhesive composition of the present invention include from about 40 wt% to about 99.9 wt% polymer solids and from about 0.1 wt% to about 60 wt% plasticizer solids. More preferably, the solids of the adhesive composition include from about 50 wt% to about 95 wt% polymer solids and from about 10 wt% to about 50 wt% plasticizer solids.

In a preferred embodiment, the adhesive composition of the present invention includes about 30 wt% to about 70 wt% solids dispersed in water and the solids include from about 15 wt% to about 80 wt% of the first polymer, from about 10 wt% to about 60 wt% of the second polymer and from about 0.1 wt% to about 60 wt% of the plasticizer compound.

In a more highly preferred embodiment, the solids of the adhesive composition include from about 20 wt% to about 75 wt% of the first polymer, from about 10 wt% to about 55 wt% of the second polymer and from about 5 wt% to about 50 wt% of the plasticizer compound.

The adhesive composition may, optionally, further include other additives known in the art such as, for example, solvents, tackifiers, emulsifiers, pigments, fillers, curing agents, thickeners, humectants, wetting agents, biocides, adhesion promoters, colorants, waxes and antioxidants.

In a preferred embodiment, the adhesive composition of the present invention is made by combining aqueous emulsions of the respective first and second polymers to form the aqueous polymer emulsion of the present invention, adding the plasticizer and any other components of the adhesive composition to the aqueous polymer emulsion so formed and agitating the combination to form a substantially uniform adhesive composition.

In a preferred embodiment, the adhesive composition of the present invention has a viscosity of from about 100 cP to about 10,000 cP, and, more preferably, of from about 200 cP to about 7,500 cP.

The adhesive composition of the present invention is useful for bonding substrates together. The adhesive composition is particularly useful for wet lamination of a plurality of sheet-like substrate layers, that is, a bonding method wherein layer of the adhesive composition is applied to a first substrate layer, the wet adhesive layer is covered with a second substrate layer and the adhesive layer is then dried to form a laminated article wherein the two substrates are bonded together by the dried adhesive layer, that is, a layer of the solids portion of the adhesive composition.

The adhesive composition of the present invention may be applied to a substrate to be bonded by known techniques such as, for example, roll coating, wire-wound rod coating, knife coating, gravure printing and curtain coating.

Suitable substrates include, for example, paper products such as papers and paperboards, wood, metal films, polymer films, woven textiles, nonwoven textiles and composite substrates, that is, substrates consisting of a combination of dissimilar substrate materials such as metallized polymer films, polymer-coated paperboards, for example, wax-coated paperboard, and wood products, for example, particle board.

### Examples 1-3 and Comparative Examples 4-6

Adhesive compositions based on each of two respective polymers were tested.

The composition of Example 1 was a blend of 70 pbw of an aqueous emulsion (55 wt% solids) of a commercially available acrylic/vinyl ester copolymer having a $T_g$ of -25°C (ROVACE® HP-2931, Rohm and Haas Company) and 30 pbw of an aqueous emulsion (55 wt% solids) of a poly(vinyl acetate) homopolymer ($T_g$ = 30°C) having a viscosity of 5,000 cP. The composition of Example 2 was made by combining 5 pbw of a plasticizer (a 50/50 blend of diethylene glycol dibenzoate and dipropylene glycol dibenzoate, known as "Benzoflex 50" from Vesicol) and 100 pbw of the composition of Example 1. The composition of Example 3 was made by combining 10 pbw of a plasticizer (Benzoflex 50) and 100 pbw of the composition of Example 1.

The composition of Comparative Example C4 was a commercially available poly(vinyl acetate/ethylene) copolymer (Airflex® 400, Air Products, Allentown, PA). The composition of Comparative Example C5 was made by combining 5 pbw of a plasticizer (Benzoflex 50) and 100 pbw of the composition of Comparative Example C4. The composition of Comparative Example C6 was made by combining 10 pbw of a plasticizer (Benzoflex 50) and 100 pbw of the composition of Comparative Example C4.

The following test procedure was used to characterize the hot strength of the above described adhesive compositions. Linerboard (40 pound) was conditioned overnight at 72°C and 55% relative humidity. The conditioned linerboard was cut to provide large coupons (4 inches x 2 inches) and small coupons (about 1 inch by 1 inch). A line was scored on each of the large coupons at a distance of 1/2 inch from one of the 4 inch long edges of the respective coupon. An adhesive composition was applied to each of the large coupons using a #50 wire wound rod to provide a wet adhesive layer of about 5 mils thickness. Two of the small coupons were applied to the adhesive covered portion of each of the large coupons, overlapping the edge of the large coupon, with one edge of each of the small coupons aligned with the scored line on the large coupon. The laminated structure so formed was then compressed by applying a 100 gram weight to the laminate for 4 minutes. The laminated structures were then conditioned at 72°C and 55 R.H. overnight. Each of the laminated structures was cut in half to form two test specimens, each consisting of a 1 inch x 1 inch coupon bonded to a 2 inch x 2 inch coupon. A hole was punched in each of the coupons of each of the respective test specimens and the edge of each of the holes was reinforced with a staple to prevent tearing of the coupons during testing. The test specimens were hung on a shear rack from the hole in the 2 inch x 2 inch coupon and positioned in an oven equilibrated at 250°C. A 500 g weight was hung from the hole in each of the respective 1 inch x 1 inch coupons of the hanging specimens. The temperature was stepped upward at an increment of 10°C each hour, up to 320°C. The time to failure for any failing samples was noted. Those specimens that survived one hour at 320°C were maintained at 300°C overnight and the number of any additional failed samples was noted the next morning. Each of the times to failure was recorded. The time to failure was expressed as a definite time if a failure was directly observed or, alternatively, was expressed relative to a definite time, for example, less than 8 hours, or as occurring between two definite times, for example, between 8 hours and 24 hours, if the failure was not directly observed.

The results of the hot strength testing is set forth below in Table 1 as time failure, t, (calculated as the arithmetic average of results for each of 2 specimens and expressed in hours) for each of the exemplary adhesive compositions. In those instances where the time to failure is expressed relative to a definite time or relative to two definite times, the symbol "<" is used to denote "less than" and the symbol ">" is used to denote "greater than", for example, a time to failure that occurred between 8 hours and 24 hours of testing would be denoted as "8 < t < 24" in TABLE 1.

**TABLE 1**

| Example # | Time to Failure, t (hours) |
|---|---|
| 1 | 7 |
| 2 | 8 < t < 24 |
| 3 | > 24 |
| C4 | 8 < t < 24 |
| C5 | 8 |
| C6 | 6.5 |

## Examples 7-12

The compositions of Examples 7, 9 and 11 were blends of different relative amounts of the aqueous acrylic/vinyl ester copolymer emulsion and the aqueous poly(vinyl acetate) homopolymer emulsion described above in Example 1. The compositions of Examples 8, 10 and 12 were made by combining 10 pbw of a plasticizer (Benzoflex 50) and 100 pbw of a respective one of the compositions of Examples 7, 9 and 10.

The hot strength of each of the compositions of Examples 7-12 was tested according to the method disclosed above in Example 1.

The relative amounts of aqueous acrylic/vinyl ester copolymer emulsion and aqueous poly(vinyl acetate) polymer emulsion used to make each of the compositions (VAA/pVAc), expressed as a weight/weight ratio, the amount of plasticizer added to the polymer emulsion, expressed as parts by weight plasticizer added per 100 parts by weight emulsion (pbw per 100 pbw emulsion), and the results of the hot strength testing, expressed as time to failure, t (hours) using the same notation as used above in Table 1, are set forth below in Table 2 for each of the compositions of Examples 7-12.

**TABLE 2**

| Example # | VAA/pVAc (wt/wt) | Plasticizer (pbw per 100 pbw emulsion) | Time to Failure, t (hours) |
|---|---|---|---|
| 7 | 1.5 | 0 | >32 |
| 8 | 1.5 | 10 | >32 |
| 9 | 2.3 | 0 | 7 |
| 10 | 2.3 | 10 | 8<t<24 |
| 11 | 4 | 0 | >32 |
| 12 | 4 | 10 | >32 |

## Examples 13-20 and Comparative Examples C21-C24

The compositions of Examples 13-20 were each based on a respective one of a series of aqueous emulsions ( ~55 wt% solids) of butyl acrylate/acrylic acid /vinyl acetate (BA/AA /VAc) copolymers wherein each of

6

the copolymers included 1 wt% repeating units derived from acrylic acid and included a different relative amount of repeating units derived from butyl acrylate and vinyl acetate . The compositions of Examples 15, 16, 19 and 20 were made by combining 70 pbw of the BA/AA/VAc polymer emulsion and 30 pbw of the aqueous poly(vinyl acetate) homopolymer emulsion described above in Example 1.

The compositions of Comparative Examples C21-C24 were each based on the vinyl acetate/ethylene copolymer emulsion described above in Example 1. The compositions of Comparative Examples C23 and C24 were made by combining 70 pbw of the vinyl acetate/ethylene copolymer emulsion and 30 pbw of the aqueous poly(vinyl acetate) homopolymer emulsion described above in Example 1.

The compositions of Examples 14, 16, 18 and 20 and Comparative Examples C22 and C24 each included 10 pbw plasticizer per 100 pbw of the polymer emulsion.

The relative amount of repeating units derived from butyl acrylate and from vinyl acetate, expressed as the ratio of the weights of the butyl acrylate and vinyl acetate monomers used to make the polymer (BA/VAc (wt/wt)), the relative amounts of base polymer emulsion, that is, of butyl acrylate/acrylic acid/vinyl acetate copolymer emulsion or vinyl acetate/ethylene copolymer emulsion, and poly(vinyl acetate) emulsion, each expressed as pbw (Base Polymer (pbw) and p(VAc) (pbw), respectively), the relative amounts of polymer emulsion and plasticizer, expressed as parts by weight plasticizer per 100 parts by weight polymer emulsion (Plasticizer (pbw per 100 pbw emulsion)) and the results of hot strength testing, expressed as time to failure, t (hours) using the same notation as used above in Tables 1 and 2, are each set forth below in Table 3 for each of the compositions of Examples 13-20 and Comparative Examples C21-C24.

## TABLE 3

| Example # | BA/VAc (wt/wt) | Base Polymer (pbw) | poly(VAc) (pbw) | Plasticizer (pbw per100 pbw emulsion) | Time to Failure, t (hours) |
|---|---|---|---|---|---|
| 13 | 1.5 | 100 | 0 | 0 | 0.8 |
| 14 | 1.5 | 100 | 0 | 10 | 0.6 |
| 15 | 1.5 | 70 | 30 | 0 | 8 < t <24 |
| 16 | 1.5 | 70 | 30 | 10 | 8 < t < 24 |
| 17 | 3.0 | 100 | 0 | 0 | 7 < t < 32 |
| 18 | 3.0 | 100 | 0 | 10 | 7 |
| 19 | 3.0 | 70 | 30 | 0 | > 32 |
| 20 | 3.0 | 70 | 30 | 10 | > 32 |
| C21 | -- | 100 | 0 | 0 | 8 < t < 24 |
| C22 | -- | 100 | 0 | 10 | 8 |
| C23 | -- | 70 | 30 | 0 | 7 < t < 32 |
| C24 | -- | 70 | 30 | 10 | 7 |

The adhesive composition of the present invention provides improved hot strength, compared to plasticized poly(vinyl ester/olefin) copolymer-based adhesive compositions such as, for example, a plasticized poly(vinyl acetate/ethylene)-based adhesive composition.

## Claims

1. A polymer emulsion, comprising:

from 30 weight percent to 70 weight percent solids dispersed in an aqueous medium, wherein the solids comprise:

from 10 weight percent to 90 weight percent of a first polymer, said first polymer having repeating units derived from a vinyl ester monomer and having a glass transition temperature of - 40°C to 0°C;

from 10 weight percent to 90 weight percent a second polymer that includes repeating units derived from a vinyl ester monomer and that has a glass transition temperature of 5°C to 40°C.

2. The polymer emulsion of claim 1, wherein the first polymer includes first repeating units, each derived from the vinyl ester monomer, and further includes second repeating units, each derived from a $(C_1$-$C_{20})$alkyl (meth)acrylate monomer.

3. The polymer emulsion of claim 2, wherein each of the first repeating units of the first polymer is derived from a vinyl ester monomer that is independently selected from the group consisting of vinyl acetate, vinyl propionate, vinyl neononanoate, vinyl neodecanoate, vinyl-2-ethylhexanoate, vinyl pivalate, vinyl versatate or a mixture thereof.

4. The polymer emulsion of claim 2, wherein the $(C_1$-$C_{20})$alkyl (meth)acrylate monomer is selected from the group consisting of methyl acrylate, ethyl acrylate, butyl acrylate, 2-ethylhexyl acrylate, and mixtures thereof.

5. The polymer emulsion of any one of claims 1-4, wherein the first polymer further comprises from 0.5 weight percent to 2 weight percent third repeating units derived from a monoethylenically unsaturated carboxylic acid monomer.

6. The polymer emulsion of claim 5, wherein the monoethylenically unsaturated carboxylic acid monomer is acrylic acid, methacrylic acid or a mixture thereof.

7. The polymer emulsion of claim 1, wherein the first polymer includes from 1 weight percent to 65 weight percent first repeating units, each derived from vinyl acetate, and further comprises from 35 weight percent to 99 weight percent second repeating units, each derived from an alkyl acrylate monomer selected from the group consisting of methyl acrylate, ethyl acrylate, butyl acrylate, ethylhexyl acrylate and mixtures thereof, and up to 3 weight percent third repeating units each derived from acrylic acid, methacrylic acid or a mixture thereof.

8. The polymer emulsion of claim 1, wherein each of the repeating units of the second polymer is derived from a vinyl ester monomer that is independently selected from the group consisting of vinyl acetate, vinyl propionate, vinyl neononanoate, vinyl neodecanoate, vinyl-2-ethylhexanoate, vinyl pivalate, vinyl versatate or a mixture thereof.

9. The polymer emulsion of claim 9, wherein the second polymer is a poly(vinyl acetate) homopolymer.

10. An adhesive composition, comprising:

from 30 weight percent to 70 weight percent solids in an aqueous medium, wherein the solids comprise:

from 15 weight percent to 80 weight percent, preferably from 20 to 75 weight percent, of a first polymer, said first polymer having first repeat units derived from a vinyl ester monomer and having a glass transition temperature of - 40°C to 0°C;

from 10 weight percent to 60 weight percent, preferably from 10 to 55 weight percent, a second polymer that includes repeating units derived from a vinyl ester monomer and that has a glass transition temperature of 5°C to 40°C; and

from 0.1 weight percent to 60 weight percent, preferably from 5 to 50 weight percent, of a plasticizer compound.

11. The composition of claim 10, wherein the plasticizer compound is selected from the group consisting of dibutyl phthalate, diethylene glycol dibenzoate, dipropylene glycol dibenzoate, esters of $(C_2$-$C_6)$alcohols with adipic acid or succinic acid and mixtures thereof.

12. A method for making a laminated article wherein two substrate layers are bonded together by a dried layer of adhesive composition, comprising:

applying a wet layer of the adhesive composition of Claim 10 to a first substrate layer;

covering the wet layer of adhesive composition with a second substrate layer; and

drying the layer of adhesive composition to form the laminated article.

13. A laminated article made by the method of claim 12.

14. The article of claim 13, wherein the first and second substrate layers are each independently selected from the group consisting of polymer films, metal films papers, paperboards, woven textiles, nonwoven textiles, metallized polymer films, coated papers, coated paperboards and wood.